# EUROPÄISCHE PATENTSCHRIFT

(11) **EP 2 134 810 B1**
(45) Veröffentlichungstag und Bekanntmachung des Hinweises auf die Patenterteilung: **09.03.2011**
(21) Anmeldenummer: 08736105.1
(22) Anmeldetag: 11.04.2008
(51) Int. Cl.: C09K 11/64

(54) **ROT EMITTIERENDER LEUCHTSTOFF UND LICHTQUELLE MIT DERARTIGEM LEUCHTSTOFF**
RED-EMITTING LUMINOPHORE AND LIGHT SOURCE COMPRISING SUCH A LUMINOPHORE
SUBSTANCE LUMINESCENTE ÉMETTANT DANS LE ROUGE ET SOURCE LUMINEUSE COMPRENANT CE TYPE DE SUBSTANCE LUMINESCENTE

(30) Priorität: 17.04.2007 DE 102007018099
(43) Veröffentlichungstag der Anmeldung: 23.12.2009
(73) Patentinhaber: Osram Gesellschaft mit beschränkter Haftung, 81543 München (DE)
(72) Erfinder: BECKER, Daniel, 86199 Augsburg (DE); FIEDLER, Tim, 81377 München (DE); JERMANN, Frank, 86343 Königsbrunn (DE); POHL, Bianca, 81379 München (DE); ZACHAU, Martin, 82269 Geltendorf (DE)
(86) Internationale Anmeldenummer: PCT/EP2008/054389
(87) Internationale Veröffentlichungsnummer: WO 2008/125604

(56) Entgegenhaltungen:
- EP-A- 1 630 219
- WO-A-2006/126567
- WO-A-2007/120216
- US-A1- 2007 040 502

## Beschreibung

### Technisches Gebiet

Die Erfindung geht aus von einem rot emittierenden Leuchtstoff, bevorzugt zum Einsatz bei Lichtquellen, gemäß dem Oberbegriff des Anspruchs 1. Die Erfindung betrifft einen hocheffizienten Leuchtstoff aus der Klasse der Nitridosilikate gemäß dem Oberbegriff des Anspruchs 1. Weiter betrifft die Erfindung eine damit hergestellte Lichtquelle und ein Verfahren zur Herstellung eines derartigen Leuchtstoffs.

### Stand der Technik

Die EP-A 1 568 753 und die EP-A 1 614 738 offenbaren einen Leuchtstoff, der rot emittiert und die Zusammensetzung MSiAlN3:Z aufweist. Dabei ist M vornehmlich Ca und der Aktivator Z vornehmlich Eu. Sie werden hier als Calsine bezeichnet. Dieser Leuchtstoff ist im UV und blauen Spektralbereich gut anregbar. Er eignet sich für Lichtquellen wie LEDs.

Ähnliche Leuchtstoffe sind aus WO 2006/126567, EP 1 630 219 und WO 2007/120 216 (Stand der Technik gemäß Artibel 54(3) EPÜ) vorbekannt._Dort wird Li3N zugesetzt bzw, EuF3 als Schmelzmittel verwendet.

Die EP-A 1 153 101 offenbart einen rot emittierenden Leuchtstoff des Typs Nitrid M2Si5N8:Eu, wobei M unter anderem Ca sein kann und der Aktivator Eu ist.

### Darstellung der Erfindung

Die Aufgabe der vorliegenden Erfindung ist es, einen schmalbandigen, temperaturstabilen Leuchtstoff, der im Roten emittiert, anzugeben.. Dabei soll die Dominanzwellenlänge größer als 610 nm liegen und der Leuchtstoff soll zur Verwendung mit UV- und Blau-LEDs geeignet sein.

Diese Aufgabe wird gelöst durch kennzeichnenden Merkmale des Anspruchs 1.

Besonders vorteilhafte Ausgestaltungen finden sich in den abhängigen Ansprüchen.

Die bisher bekannten Systeme zeichnen sich wie Fall der Nitride durch sehr hohe Effizienz und Temperaturstabilität aus, haben jedoch den Nachteil der breitbrandigen Emission. Die bekannten Calsine emittieren zwar schmalbandiger als die Nitride und sie zeige eine bessere Absorption im Blauen. Allerdings ist die Temperaturstabilität der Lumineszenz schlechter als bei den Nitriden. Außerdem ist eine kurzwelligere Emission in bestimmten Anwendungen wünschenswert, insbesondere um einen höheren visuellen Nutzeffekt zu erzielen.

Erfindungsgemäß werden jetzt bei der Synthese von Calsinen Fluoride als Schmelzmittel zugegeben. Dies verbessert die Phasenbildung, Kornform und auch die Homogenität des Leuchtstoff. Um keine Verunreinigungen durch Fremdionen zu erhalten werden in der Praxis meist Fluoride zusammen mit Kationen verwendet, die in der Zielverbindung vorliegen. Bei CaSiAlN3:Eu ist dies also CaF2, AlF3 oder auch EuF3. LiF wird als Schmelzmittel, d.h. in den typischen dafür geeigneten kleinen Mengen, im Prinzip ebenfalls bekannt. Überraschenderweise hat sich aber gezeigt, dass sich LiF in signifikanten Mengen in die Zielverbindung einbaut und dabei die Eigenschaften der Calsine deutlich verbessert.

Der neue Leuchtstoff ist beispielsweise für Color on demand- LEDs oder für weiße LEDs oder auch andere Lichtquellen wie Lampen geeignet. Er lässt sich für unterschiedliche Farbtemperaturen und Anwendungen mit hoher Effizienz und guter Farbwiedergabe maßschneidern.

Durch den Einbau von Li-Ionen in das Gitter wird die Temperaturstabilität des Leuchtstoffs, sein sog. thermal quenching, signifikant verbessert, ohne dass sich andere Eigenschaften des Leuchtstoffs negativ verändern. Der Schwerpunkt und Peak der Emission verschiebt sich überraschendweise bei konstantem Eu-Gehalt in Richtung kürzerer Wellenlänge. Dies erhöht tendenziell die Effizienz. Theoretisch wäre dagegen eher eine langwellige Verschiebung zu erwarten. Die Gründe dafür liegen theoretisch in einem gröberen Korn und in einer erhöhten Selbstabsorption der kurzwelligen Emissionsanteile bei Verwendung von LiF. Diese Überlegungen haben sich jedoch nicht bewahrheitet.

Sogar die Quanteneffizienz und die Strahlungsstabilität verbessern sich tendenziell.

### Kurze Beschreibung der Zeichnungen

Im Folgenden soll die Erfindung anhand eines Ausführungsbeispiels näher erläutert werden. Die Figuren zeigen:
- Fig. 1: das Emissions- und Reflexionsspektrum eines fluo- ridisierten Calsin-Leuchtstoffs;
- Fig. 2: das Temperaturlöschverhalten eines fluoridisierten Calsin-Leuchtstoffs als Funktion der LiF-Einwaage.
- Fig. 3: den Effekt der LiF-Einwaage auf die Oxidationssta- bilität des Calsin-Leuchtstoffs.

### Bevorzugte Ausführung der Erfindung

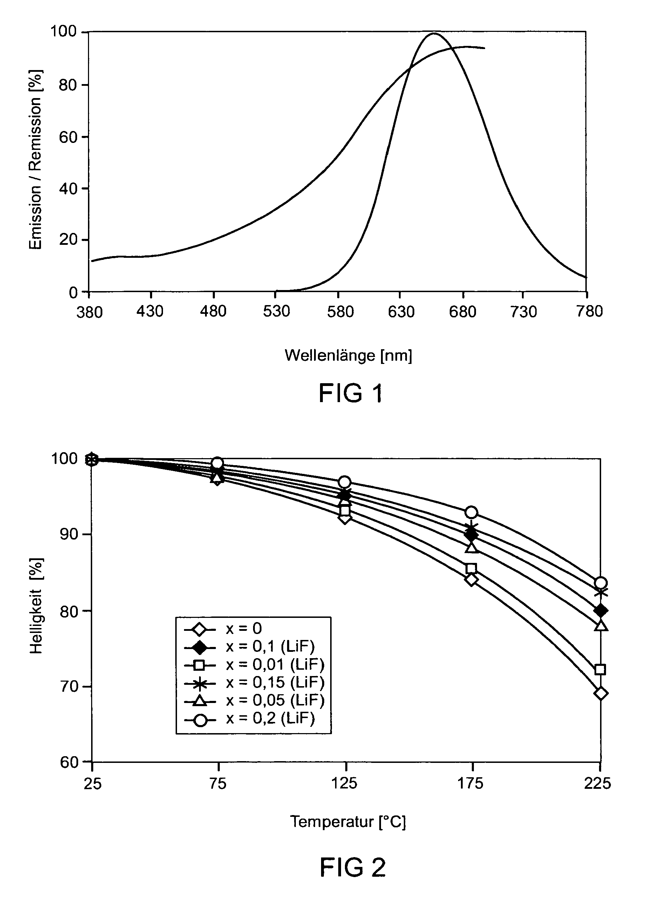

Figur 1 zeigt das Emissions- und Reflexionsspektrum eines fluoridisierten Calsin-Leuchtstoffs mit der nominellen Zusammensetzung im Sinne einer Ansatzstöchiometrie Ca₀, ₈₈Eu₀, ₀₂Li₀, ₁AlSi (N₀, ₉₆₇F₀, ₀₃₃)₃. das Emissionsmaximum liegt bei etwa 655 nm.
Figur 2 zeigt das Temperaturlöschverhalten für verschiedene Anteile LiF als Funktion der Temperatur. Kurve 1 ist Calsin Ca₀, ₉₈Eu₀, ₀₂AlSiN ohne Beimengung von LiF. Kurve 2 zeigt die Stabilität eines Calsins mit 1 Mol.-% Anteil Li an M, wobei hier M = Ca. Kurve 3 zeigt 5 Mol.-% Anteil Li an M und Kurve 4 zeigt 10 Mol.-% Anteil Li an M. Hier gilt jeweils dass sich gleiche Molmengen F ebenfalls für N einlagern, im Sinne der obigen Formel.

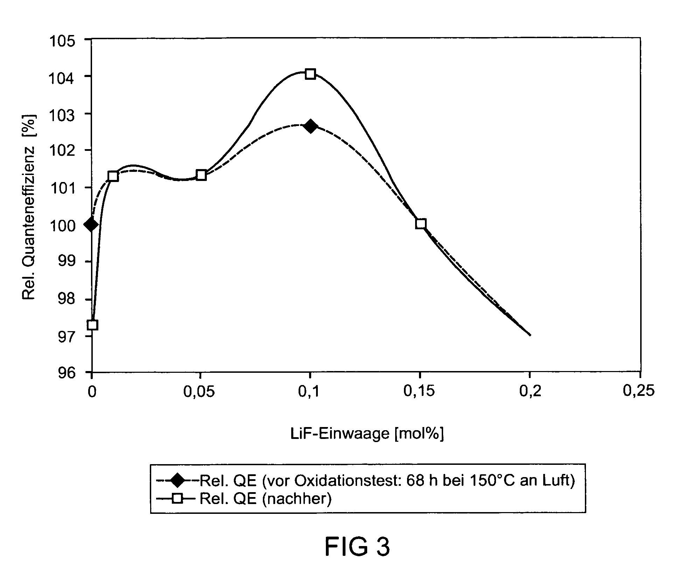

Figur 3 zeigt den Effekt der LiF-Einwaage auf die Oxidationsstabilität des Calsin-Leuchtstoffs. Dabei zeigt sich ein komplexes Verhaltensmuster. Dargestellt ist die relative Quanteneffizienz vor dem Oxidaitonstest (gestrchelt) und nachher (durchgezogen). Während die Verwendung geringer Mengen an LiF die Quanteneffizienz eher verschlechtert, zeigt sich ab einer LiF-Einwaage von 5 Mol.-% eine messbare Verbesserung der Oxidationsstabilität. Sie nimmt mit zunehmendem Gehalt an LiF weiter zu bis 10 Mol.-% Anteil des LiF. Bei höherem Anteil wird die Stabilität wieder schlechter. Bei 15 Mol.-% verhalten sich beide Kurven gleich.

Als Basis-Leuchtstoff eignet sich grundsätzlich ein rot emittierender Leuchtstoff aus dem M-Al-Si-N System, mit einem Kation M, wobei M durch Ca oder Ba oder Sr allein oder in Mischung repräsentiert ist oder zusätzlich mit mindestens einem weiteren Element aus der Gruppe Mg, Zn, Cd kombiniert sein kann, wobei der Leuchtstoff mit Eu aktiviert ist.

Der Anteil LiF sollte maximal 15 Mol.-%, bezogen auf M, betragen.

Bevorzugt sollte der Anteil LiF mindestens 1 Mol. -% betragen, bezogen auf M.

Für M sollte vorteilhaft Ca allein oder weit überwiegend, also zu mehr als 70 Mol.-% Ca, verwendet werden.

Die Herstellung des neuartigen Leuchtstoffs lässt sich beispielsweise wie folgt durchführen, am Beispiel (Ca, Eu) AlSiN3-LiF (2 Mol.-%) erläutert:
Die Ausgangssubstanzen Ca3N2 (6,02 g), AlN (6,02 g), LiF (0,57 g), Si3N4 (6,87 g) und Eu203 (0,52 g) werden in der Glovebox und unter Zuhilfenahme eines Mischers gemischt.
Die Ansatzmischungen werden in einem Rohrofen unter inerter Atmosphäre, bevorzugt N2 mit Zusatz an FG, für mehrere Stunden bei Temperaturen um 1450 bis 1680 °C gekühlt.
Die Aufheiz- und die Abkühlrate liegt dabei bei etwa 150 bis 300 K/h.

## Patentansprüche

1. Rot emittierender Leuchtstoff aus dem M-Al-Si-N System, mit einem Kation M, wobei M durch mindestens eines der Elemente Ca oder Ba oder Sr repräsentiert ist und ggf. zusätzlich mit mindestens einem weiteren Element aus der Gruppe Mg, Zn, Cd kombiniert sein kann, wobei dieser Leuchtstoff mit Eu aktiviert ist, das M teilweise ersetzt, **dadurch gekennzeichnet, dass** der Leuchtstoff zusätzlich LiF enthält, wobei der Anteil LiF mindestens 1 mol.-% beträgt, bezogen auf M.

2. Leuchtstoff nach Anspruch 1, **dadurch gekennzeichnet, dass** der Anteil LiF maximal 15 mol.-%, bezogen auf M, beträgt.

3. Leuchtstoff nach Anspruch 1, **dadurch gekennzeichnet, dass** M = Ca allein oder überwiegend, zu mehr als 50 mol.-%.

4. Liehtquelle mit einem Leuchtstoff nach einem der vorhergehenden Ansprüche.

## Claims

1. Red-emitting phosphor composed of the M-Al-Si-N system, comprising a cation M, wherein M is represented by at least one of the elements Ca or Ba or Sr and, if appropriate, can additionally be combined with at least one further element from the group Mg, Zn, Cd, wherein this phosphor is activated with Eu, which partly replaces M, **characterized in that** the phosphor additionally contains LiF, wherein the proportion of LiF is at least 1 mol%, relative to M.

2. Phosphor according to Claim 1, **characterized in that** the proportion of LiF is at most 15 mol%, relative to M.

3. Phosphor according to Claim 1, **characterized in that** M = Ca alone or predominantly, to the extent of more than 50 mol.%.

4. Light source comprising a phosphor according to any of the preceding claims.

## Revendications

1. Substance luminescente émettant dans le rouge en le système M-Al-Si-N, comprenant un cation M, M étant représenté par un des éléments Ca ou Ba ou Sr et pouvant être combiné, le cas échéant, en plus, avec au moins un autre élément du groupe Mg, Zn, Cd cette substance luminescente étant activée par de l'Eu, qui remplace en partie M, **caractérisée en ce que** la substance luminescente contient, en plus, du LiF, la proportion de LiF représentant au moins 1% en mole, rapporté à M.

2. Substance luminescente suivant la revendication 1, **caractérisée en ce que** la proportion de LiF représente au maximum 15 % en mole rapporté à M.

3. Substance luminescente suivant la revendication 1, **caractérisée en ce que** M = Ca seul ou d'une manière prépondérante, pour plus de 50% en mole.

4. Source lumineuse ayant une substance luminescente suivant l'une des revendications précédentes.
